# EUROPEAN PATENT APPLICATION

(11) **EP 4 403 791 A1**
(43) Date of publication of application: **24.07.2024**
(21) Application number: 23152126.1
(22) Date of filing: 18.01.2023
(51) Int. Cl.: F16D 65/00

(54) **FILTER ARRANGEMENT, BRAKE ARRANGEMENT AND METHOD**

(71) Applicant: MANN+HUMMEL GmbH, 71636 Ludwigsburg (DE)
(72) Inventor: WÖRZ, Tobias, 71397 Leutenbach (DE); JESSBERGER, Thomas, 71679 Asperg (DE); WELLER, Benedikt, 71711 Steinheim (DE); PRICKEN, Franc, 74348 Lauffen (DE); MÜNCH, Peter, 71732 Tamm (DE); ROCKINGER, Theodor, 84163 Marklkofen (DE); AIGNER, Andreas, 94431 Pilsting (DE); RIEDINGER, Korbinian, 94405 Landau (DE); PLENK, Philipp, 94405 Landau (DE)
(74) Representative: Mann + Hummel Intellectual Property

(57) **Abstract**

A filter arrangement (16), in particular a brake dust particle filter, includes at least one holder (20) for arranging the filter arrangement (16) on a structure, in particular for fastening to a wheel carrier, a filter frame (22) attached to the at least one holder (20), wherein the filter frame (22) has at least one frame opening (40, 54) through which an air flow can pass, at least one filter element (24, 42) having a sealing surface (38, 50), wherein the filter element (24, 42) is sealingly arranged via the sealing surface (38, 50) at the filter frame (22) such to cover the at least one frame opening (40, 54), and at least one fixing means (28, 48).

## Description

### Technical Field

The invention relates to a filter arrangement, in particular to a brake dust particle filter, comprising:
at least one holder for arranging the filter arrangement on a structure, in particular for fastening to a wheel carrier;
a filter frame attached to the holder, wherein the filter frame has at least one frame opening through which an air flow can pass;
at least one filter element having a sealing surface, wherein the filter element is sealingly arranged via the sealing surface on the filter frame such to cover the at least one frame opening; and
at least one fixing means.

The invention relates also to a brake arrangement and to a method for replacing a filter element.

### Background Art

Filter arrangements of the type mentioned above are generally known from the prior art. In particular, filter arrangements of this type are used on disc brakes in order to separate the brake dust that is produced by the braking process and is carried along in the flow of air.

Conventional filter arrangements comprise one or more filter elements permanently attached to the filter assembly. The filter elements are typically bonded, welded or the like to a carrier during manufacture. When the filter service life has been reached or the filter element is occupied by particles that have been picked up, in particular brake dust, the entire filter arrangement has to be replaced, since the filter element alone cannot be detached from the filter arrangement or can only be detached by damaging the filter arrangement. This causes considerable financial costs and the use of resources.

US 2013/0174742 A1 describes a self-expanding filter for filtering impurities out of gases, for example for filtering brake dust from vehicles. The self-expanding filter can be replaced during maintenance via a service opening in a duct housing surrounding the filter. However, the aforementioned filter requires an additional housing. Furthermore, the aforementioned filter has dimensions that preclude an arrangement in confined spaces, for example on disc brakes.

It is an object of the invention to specify a compact filter arrangement that enables filter elements to be replaced quickly, inexpensively and with little use of resources. Another object of the invention is to specify a brake filter arrangement and a method for changing a filter element.

### Summary

This object is achieved by a filter arrangement having the features specified in claim 1, a brake arrangement according to claim 13 and a method according to claim 14. Preferred embodiments are specified in the dependent claims and the description.

According to the invention, a filter arrangement is provided. The filter arrangement is suitable for filtering air. In other words, the filter arrangement is suitable for removing solids, for example dust. In particular, the filter arrangement can be designed as a brake dust particle filter.

The filter arrangement comprises at least one holder. Preferably, the holder is designed to arrange the filter arrangement at a structure. Particular preferred the holder is suitable for fastening the filter arrangement to a wheel carrier. The wheel carrier typically comprises a brake, preferably a disc brake.

The filter arrangement comprises a filter frame. The filter frame is attached to the holder. The filter frame may be detachably attached to the holder, in particular by screws.

The filter frame has at least one frame opening through which an air flow can pass. The filter frame preferably has several frame openings. This enables the particularly simple arrangement of further filter elements at the filter frame.

Typically, the frame opening is designed for arranging a filter element. The frame opening preferably has an edge surrounding the frame opening, which is designed for a flat arrangement of the filter element. This simplifies the arrangement or attachment of the filter element to the filter frame.

The filter frame can be made of a thermally resistant material, in particular metal. The filter frame is preferably formed in one piece. Particularly preferably, the filter frame is made from only one blank, in particular by sheet metal forming. This enables the filter frame to be manufactured particularly quickly and inexpensively.

The filter arrangement comprises at least one filter element. The at least one filter element has a sealing surface. The sealing surface is generally complementary to a contact area for the filter element on the filter frame. Preferably, the filter element has the sealing surface on an edge section formed to connect the filter element to the filter frame.

The edge section can be formed as a mechanically compacted section of the filter element. In other words, the filter element may be compacted in areas to form the edge section. This may increase the connectivity of the filter element in the edge portion.

The at least one filter element typically has a filtration section. The filtration section is generally air-permeable and designed to separate solids, in particular brake dust particles, form air passing through the filtration section. The edge section preferably surrounds the at least one filtration section in a frame-like manner. In other words, the edge section may be continuous. This favours circumferential contact with the filter frame and prevents air from bypassing the filtration section.

The filter element is sealingly arranged via the sealing surface at the filter frame such to cover the at least one opening. The filter element is preferably arranged at an edge of the frame opening. Particularly preferably, the filter element is sealed in an air-impermeable manner. In this way, leakage of the filter element via the sealing surface and the filter frame can be effectively prevented.

The filter arrangement comprises at least one fixing means. The fixing means can be one-piece or multi-piece. The fixing means can be detachable from the filter arrangement, in particular completely. Furthermore, it may be provided, that the fixing means is at least partially formed on the filter frame.

According to the invention, the filter element is held detachably clamped to the filter frame via a mounting frame by the fixing means. The mounting frame preferably causes the filter element to be pressed flat against the filter frame. For this purpose, the mounting frame can be more rigid than the filter element. In particular, the mounting frame may press the sealing surface of the filter element against the contact area of the filter frame, which contact area is typically formed at a perimeter of the frame opening.

In summary, the underlying object is solved by a filter arrangement in which at least one filter element can be removed without damage and a new filter element can be inserted. This allows the essential components of the filter arrangement to be reused, thereby reducing the manufacturing costs and conserving the resources to be used.

In a preferred embodiment of the filter arrangement, the mounting frame is permanently affixed to the filter element. The mounting frame can be formed on the filter element. Furthermore, the mounting frame can be attached to the filter element as a separate component. The mounting frame can be fastened by means of adhesive bonding and/or welding, for example. This can reduce the number of individual parts for arranging the filter element on the filter frame, which facilitates assembly. In this case, the fixing means typically engage on the mounting frame, which is rigidly connected to the filter element.

As an alternative to the previously described embodiment of the filter arrangement, the mounting frame and the filter element may be detachable from one another. In other words, the mounting frame can be separated from the filter element when the fixing means is loosened. This allows the mounting frame to be reused. Furthermore, the filter element can be manufactured more easily, further saving costs and resources.

In a preferred embodiment of the filter arrangement, the mounting frame is part of a protective cover. The protective cover is designed to cover the filter element. This effectively prevents unwanted contact of objects and/or persons with the filter element. Advantageously, the filter element can be effectively protected from impurities and/or liquids, in particular spray water from the outside.

Typically, the protective cover has at least one cover opening through which an air flow can pass. Preferably, the protective cover has a grid-like design. This can result in a particularly low flow resistance at the protective cover.

In another preferred embodiment of the filter arrangement, it is provided, that the fixing means comprises at least one screw. In other words, the filter element is held screwed to the filter frame. A bolted arrangement is a particularly inexpensive, simple and at the same time often reusable type of connection.

In addition, a preferred embodiment of the filter arrangement is one in which the fixing means is designed as a clamp fastener. In other words, the filter element is held clamped to the filter frame. Typically, the fixing means in this case has a first fixing part arranged on the filter frame and a second fixing part arranged on the mounting frame. In the case of a protective cover, the second fixing part may be formed on the protective cover. A clamp fastener can, for example, take the form of one or more latching lugs that can engage in correspondingly complementary recesses. Further, for example, the clamp fastener can be designed as a clamping bracket, which effects a clamped fastening of the filter element to the filter frame by means of a lever lock. A clamp fastener enables the filter element to be fastened to the filter frame particularly quickly.

In a preferred embodiment of the filter arrangement filter arrangement the filter element comprises at least two support layers and at least one filter medium, the filter medium being held pressed between the support layers. By means of the support layers, the filter medium can be held in a predetermined shape and acquires greater rigidity. This means that instead of several smaller filter elements, only one or few larger filter elements can be used, which reduces the time and effort required to change them.

Preferably, at least one, in particular each, support layer is formed as a perforated plate, slotted screen, expanded metal or wire mesh. At least one, in particular each, support layer may consist of a metal or a metal alloy, in particular of steel, preferably of a stainless steel.

The filter medium is preferably designed as a high-temperature filter medium. The high-temperature filter medium typically has at least one heat-resistant filter layer. The high-temperature filter medium is preferably designed for use at ambient temperatures of over 300°C. This makes it possible to use it on components that heat up strongly, such as disc brakes. Preferably, the high-temperature filter medium is multi-layered. This allows the high-temperature filter medium to be adapted particularly flexibly with regard to its filter properties, for example air permeability and/or depth filtration.

Preferred is an embodiment of the filter arrangement in which the filter arrangement comprises at least two filter elements. In particular preferred the filter elements both being held detachably at the filter frame. This allows both, in particular all, filter elements to be changed. The filter elements can be attached to the filter frame via the same mounting frame. This allows simultaneous replacement of the filter elements by loosening only one mounting frame.

A preferred further development of the filter arrangement provides that the filter arrangement comprises at least two mounting frames, the filter elements each being clamped to the filter frame by one of the mounting frames. This supports step-by-step replacement of the filter elements and simplifies replacement by reducing the number of components to be arranged.

In a preferred embodiment of the filter arrangement, the filter frame has a L-shaped or a U-shaped cross-section. The cross-section may extend along a circular path, thereby forming at least one substantially annular portion and a substantially curved portion. In the case of the U-shaped cross-section, the filter frame preferably forms two substantially annular portions. Typically, the substantially annular portion is suitable to cover a brake surface of a brake disc at least partially. Also typically, the substantially curved portion is suitable to cover a circumferential surface of the brake disk at least partially. In other words, the filter frame may be designed to at least partially receive a brake disc. The filter frame can be designed to encompass the brake disc on two or three sides. This enables the filter frame to reduce flow around the filter element.

Another preferred embodiment of the filter arrangement is that at least one filter element is arranged at the annular portion and/or at least one filter element is arranged at the curved portion. This allows, for example, two sides of a brake disc to be surrounded by filter elements and a filter effect to take place in both a radial and an axial direction in relation to the brake disc.

In a preferred further development of the filter arrangement, the filter frame has a U-shaped cross-section and the filter arrangement comprises at least three filter elements. In this case, preferably at each of the annular and curved portions at least one filter element can be arranged at the filter frame. This makes it possible to achieve a particularly high filter effect.

The underlying task is further solved by a brake arrangement. The brake arrangement comprises a brake disc, a brake caliper and a filter arrangement as described above and below. Typically, the filter frame of the filter arrangement covers the brake disk adjacent to the brake caliper. This allows collecting brake dust, which is emitted from the brake caliper, where brake pads of the caliper contact the brake disk, in the filter element of the filter arrangement.

The underlying task is further solved by a method for replacing a filter element in a filter arrangement. The filter arrangement is a filter arrangement as described above and below. The method comprises at least the following steps:
releasing the fixing means;
removing the filter element from the filter frame;
arranging another filter element at the filter frame;
securing the fixing means for clamping the filter element to the filter frame via the mounting frame.

In process step a), the one or several fixing means are first released. In particular, it can be provided, that for replacing each filter element of the filter arrangement the method is executed individually.

In a subsequent process step b), the corresponding filter element can be removed from the filter frame.

In a further process step c), another filter element may be arranged at the filter frame.

In a subsequent process step d), the respective fixing means may be secured to effect a clamped attachment of the filter element to the filter frame via the respective mounting frame. The filter arrangement is now ready for use with the newly mounted filter element.

### Brief Description of Drawings

Further features and advantages of the invention will be appreciated from the following detailed description of exemplary embodiments of the invention, from the patent claims and from the figures of the drawing, which show details according to the invention. The features mentioned above and those detailed below can each be implemented individually or collectively in any desired, expedient combinations in variants of the invention. The features shown in the drawing are presented in such a way that the special features according to the invention can be made clearly visible.

The figures show:
FIG. 1 shows a brake arrangement with a filter arrangement in a perspective view.
FIG. 2 shows an embodiment of a filter arrangement according to the invention with an embodiment of a first filter element in a side view.
FIG. 3 shows the filter arrangement from FIG. 2 in a sectional view.
FIG. 4 shows the filter arrangement from FIG. 2 in a perspective view.
FIG. 5 shows the filter arrangement from FIG. 2 in partially exploded view.
FIG. 6 shows another embodiment of the first filter element in a perspective view.
Fig. 7 shows a method for replacing a filter element in a filter arrangement.

### Detailed Description

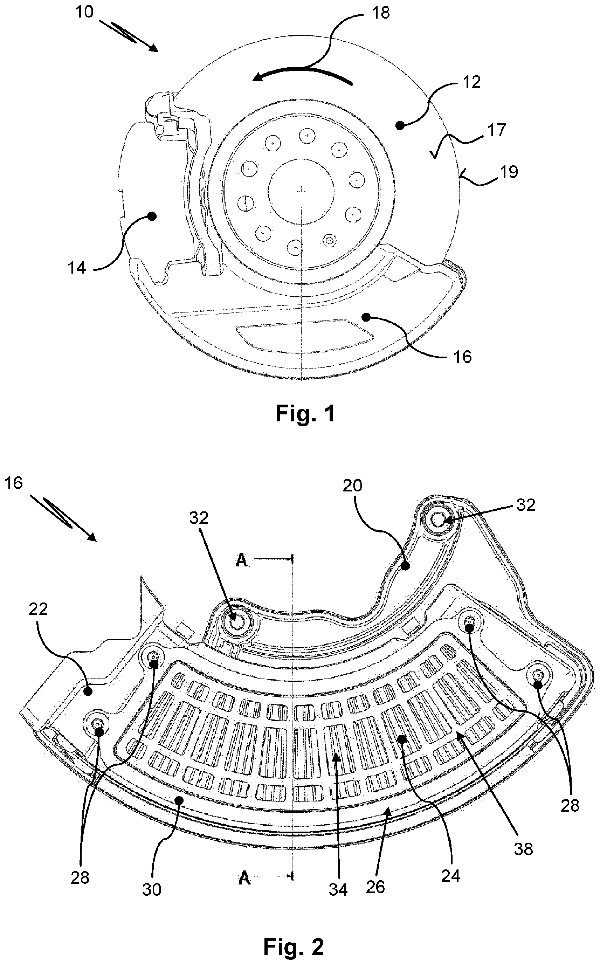

Figure 1 shows a brake arrangement 10 comprising a brake disc 12, a brake caliper 14 and a filter arrangement 16. The filter arrangement 16 is arranged at the brake disc 12 and suitable for filtering brake dust (not shown). In other words, the filter arrangement 16 is a brake dust particle filter.

The brake disc 12 has two brake surfaces 17, only one of which can be seen in figure 1. The brake surfaces 17 can be brought into frictional contact with brake pads (not shown) of the brake caliper 14.

Also shown by the embodiment, the filter arrangement 16 is - in a direction of rotation 18 of the brake disc 12 - arranged downstream of (i.e. behind) the brake caliper 14. Such an arrangement is particularly effective if the direction of rotation 18 is a main direction of rotation or a predominantly used direction of rotation. For example, the direction of rotation 18 of a vehicle-wheel arranged at the brake disc 12 in forward motion. In the event of a braking process, i.e. the active braking of the brake disc 12 by the brake caliper 14, brake dust (not shown) is produced as a result of the friction between the brake surfaces 17 and the brake pads, which is entrained in an air flow forced by the rotary movement of the brake disc 12 along the direction of rotation 18 over a certain angular range. The air flow is guided by the rotary motion of the brake disc 12 along a flow path through the filter arrangement 16, whereby the entrained brake dust is separated. The cleaned air flow is then directed into the environment. Brake dust generated during the braking process is thereby mainly carried into the filter arrangement 16.

In the case of a disc brake arrangement 10 which does not have a main direction of rotation, not shown provisions may be made for a filter arrangement 16 to be located upstream of the brake caliper 14 and/or for a further filter arrangement 16 to be located downstream.

The filter arrangement 16 extends in the direction of rotation 18 over an angular range of 100°±45°, in particular ±30°, preferably ±15°. This enables effective separation of brake dust via the filter arrangement 16 while at the same time providing good air cooling of the brake disc 12.

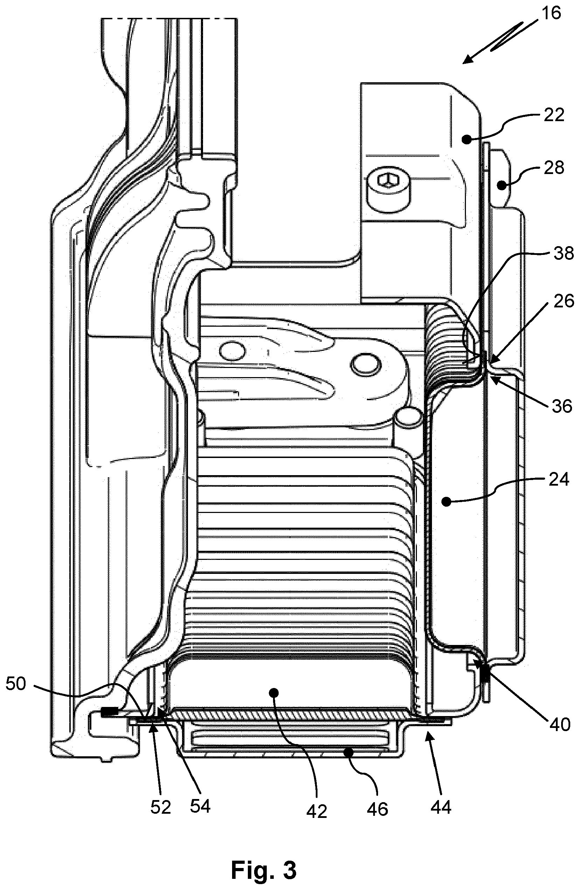

The filter arrangement 16 surrounds the brake disc 12 at the radially outer edge of the brake disc 12, thereby covering a circumferential surface 19 of the brake disc 12 at least partially. This can prevent a large proportion of air contaminated with brake dust from flowing unfiltered around the filter arrangement 16 (see also figure 3).

Figure 2 shows a first embodiment of the filter arrangement 16 according to the invention in a side view. The filter arrangement 16 comprises a holder 20, a filter frame 22, a first filter element 24, a first mounting frame 26, first fixing means 28 and - according to this embodiment - and a first protective cover 30.

The holder 20 is suitable for arranging the filter arrangement 16 on a structure (not shown), in particular for fastening the filter arrangement 16 to a wheel carrier near a brake disc 12 (see figure 1) and/or a caliper 14 (see figure 1). Preferably, the holder 20 has fastening holes 32 formed for this purpose. The fastening holes 32 can be designed for arranging fastening screws (not shown). The holder 20 may, for example, be welded, glued and/or screwed to the filter frame 22.

The first mounting frame 26 can be circumferentially closed. The first mounting frame 26 typically has a first inner area 34 through which the air flow can pass. Preferably, the first mounting frame 26 covers, in particular exclusively, a first edge section 36 (see figure 3) of the first filter element 24, in particular completely. The first mounting frame 26 is typically designed for the planar and preferably sealing abutment of the first filter element 24 against the filter frame 22. For this purpose, the mounting frame 26 can be stiffer than the first filter element 24. The first edge section 36 is preferably planar. This allows a particularly simple and at the same time reliably fluid-tight arrangement on the filter frame 22.

According to the present embodiment, the first mounting frame 26 is part of the first protective cover 30. In other words, the first mounting frame 26 may be formed on the first protective cover 30. This allows the first protective cover 30 to be attached to the filter frame at the same time as the first filter element 24 is mounted.

According to the invention, the first filter element 24 is held detachably clamped to the filter frame 22 via the first mounting frame 26 by the first fixing means 28. In other words, according to the embodiment shown, the first protective cover 30 is screwed to the filter frame 22 by means of the first fixing means 28. Thereby, the first filter element 24 arranged between the first mounting frame 26 and the filter frame 22 is clamped to the filter frame 22.

A detachable fastening is in particular understood to mean a fixed but releasable arrangement preferably using reusable fixing means 28. Since, for example, no permanent material connection is required according to the invention, all components of the filter arrangement 16 may be removed without damage and may be reused when the filter element 24 is changed.

Figure 3 shows the filter arrangement 16 from figure 2 in a sectional view according to the section line A-A shown in figure 2 for further explanation of the invention.

As shown in figure 3, the first mounting frame 26 is in contact with the first edge section 36 of the first filter element 24. The first filter element 24 is thereby pressed against the filter frame 22 by the first fixing means 28 via the first mounting frame 26.

The first filter element 24 has, preferably at the first edge section 36, a first sealing surface 38 for sealing engagement with the filter frame 22. This can prevent flow around the first filter element 24 between the first filter element 24 and the filter frame 22 and increase the separation efficiency of the first filter element 24.

The first filter element 24 covers a first frame opening 40 of the filter frame 22. The first filter element 24 may contact the filter frame 22 on one side of, as shown, and protrude through the first frame opening 40. This can increase a filter area of the first filter element 24 and keep the dimensions of the filter assembly 16 compact.

As shown, the filter arrangement 16 can comprise a second filter element 42, a second mounting frame 44 and according to this embodiment a second protective cover 46. According to the embodiment, the second mounting frame 44 is part of the second protective cover 46.

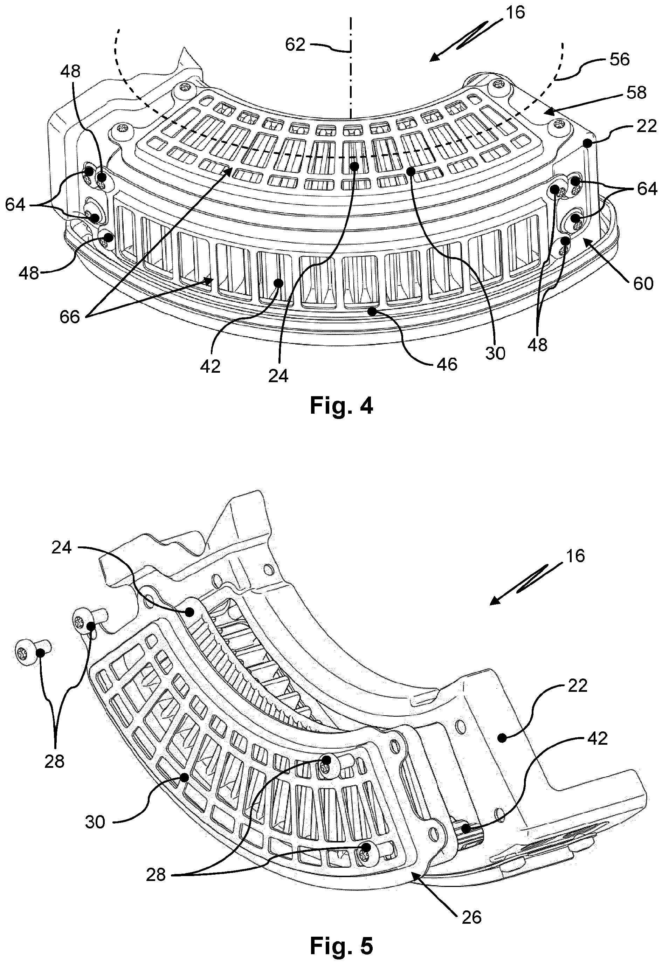

The second filter element 42 is detachably arranged on the filter frame 22 in a manner analogous to the first filter element 24. In other words, the second filter element 42 may be attached to the filter frame 22 via second fixing means 48 (see Figure 4) and the second mounting frame 44.

The second filter element 42 may also have a second sealing surface 50, preferably formed at a second edge section 52 of the second filter element 42. The second filter element 42 is preferably in sealing contact with the filter element 22 via the second sealing surface 50 and thereby covers a second frame opening 54 of the filter frame 22.

According to the embodiment shown, the filter frame 22 has a substantially L-shaped cross-section. The holder 20 has a substantially I-shaped cross-section as shown. The holder 20 and filter frame 22 can preferably complement each other to form a U-shaped cross-section. This allows a brake disc 12 (see figure 1) to be embraced, thereby reducing unfiltered bypass flows. Alternatively, the filter frame 22 may have a U-shaped cross-section. This can further promote the aforementioned advantages.

Figure 4 shows a perspective view of the filter arrangement 16 from figures 3 and 4.

As shown, the cross-section of the filter frame 22 may extend along a circular path 56, thereby forming at least one substantially annular portion 58 to cover at least one brake surface 17 (see figure 1) of the brake disc 12 (see figure 1) at least partially. The cross-section also may form a substantially curved portion 60 to cover the circumferential surface 19 (see figure 1) of the brake disc 12 at least partially. In other words, the filter arrangement 16 is preferably formed in the shape of a ring segment around a central axis 62 of the filter arrangement 16 to surround the brake disc 12 at least in sections.

According to the embodiment shown, the filter arrangement 16 comprises one filter element 24 arranged at the annular portion 58 and one filter element 42 arranged at the circular portion 60 of the filter frame 22. This can increase the total filter area of the filter arrangement 16 and improve the filtering effect. Furthermore, it can be provided, that the filter arrangement 16 has further filter elements. For example, the filter arrangement 16 may comprise a plurality of filter elements 24, 42 arranged at the annular portion 58 and/or at the curved circular portion 60.

The filter frame 22 may be fixed to the holder 20 by screws 64. This allows the filter cage 22, preferably with filter elements 24, 42 and/or protective covers 30, 46 arranged thereon, to be detached from the holder 20. This allows said unit to be quickly and easily removed from the brake arrangement 10, which may further simplify maintenance.

The protective covers 30, 46 typically have at least one cover opening through which filtered air can escape into the environment. The protective cover 30 and/or the protective cover 46 may have an engagement protection 66 as shown. The engagement protection 66 may be in the form of a grille. The engagement protection 66 can prevent unintentional penetration of objects and thus protect the first filter element 24 and/or the second filter element 42 from damage.

Figure 5 shows the filter arrangement 16 in a partially exploded view for further explanation of the invention.

While the second filter element 42 is shown in a state arranged on the filter frame 22, the first filter element 24 is shown in a state detached from the filter frame 22. In the embodiment of the filter arrangement 16 shown, the first fixing means 28 can first be released for this purpose. Then, the first protective cover 30 and the first filter element 24 can be removed from the filter arrangement 16. The first filter element 24 can, for example, be replaced by another first filter element 24, in particular a first filter element 24 that is not loaded with filtered particles. Subsequently, the first protective cover 30 can be arranged again on the filter frame 22 and attached with the first fixing means 28 so that the first filter element 24 is clamped between the first mounting frame 26 and the filter frame 22.

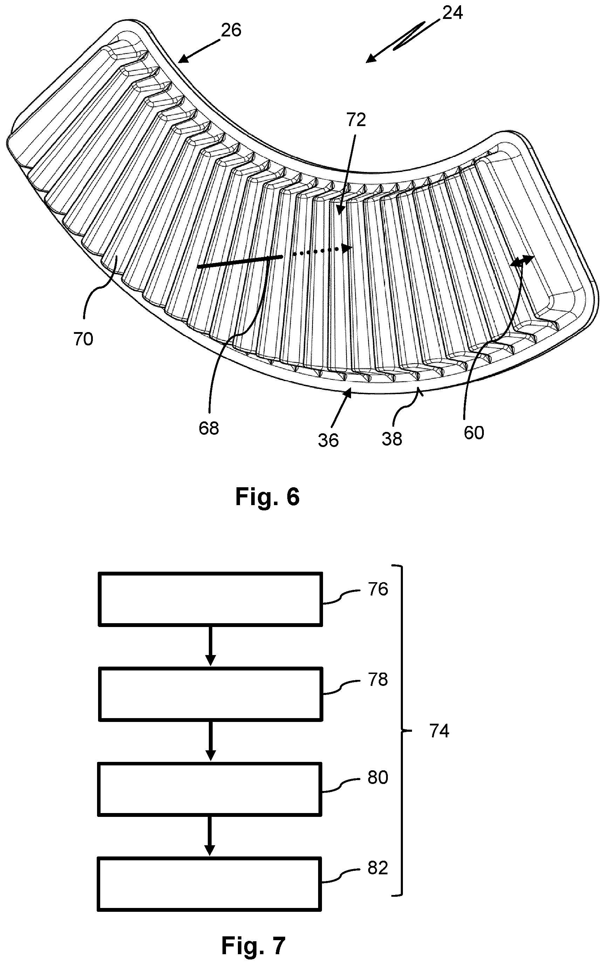

Figure 6 shows another embodiment of a first filter element 24 in a perspective view.

The first filter element 24 may have a circular ring section in its basic shape. The first filter element 24 may have an axial main flow direction 68 with respect to the brake disc 12 (see figure 1). The main flow direction 68 can be opposite to the direction of protrusion of filter pleats 70 (for the sake of clarity, only one filter pleat 70 is marked with a reference sign) from its first edge section 36 or first sealing surface 38.

The main flow direction 68 is to be understood as a global flow direction related to the first filter element 24, whereby the first filter element 24 may have several local, different flow directions. The main flow direction 68 preferably results from the sum of local flow directions through the first filter element 24. The main flow direction 68 for a flat first filter element 24 without a bulge and/or indentation can, for example, be aligned perpendicular to the first filter element 24.

According to an embodiment, the first filter element 24 has a filtration section 72 comprising the pleats 70. The filtration section 72 substantially, in particular completely, covers the first frame opening 40 of the filter frame 22 (see Figures 2-5). The filtration section 72 is typically permeable to air, but is designed to separate solids, in particular brake dust particles, from the air flow. According to the embodiment shown, the filtration section 72 is formed orthogonally to the main flow direction 68 of the first filter element 24.

The first filter element 24 has a first sealing surface 38 for sealing engagement with the filter frame 22. The sealing surface 38 may be formed on an edge section 36 of the first filter element 24.

In the particular embodiment of the first filter element 24 shown, the first mounting frame 26 is formed at the first filter element 24. The first mounting frame 26 may be formed as a reinforcment of the first edge section 36 of the first filter element 24, as shown. Here, the mounting frame 26 is arranged opposite to the first sealing section 38 on the first edge section 36 of the first filter element 24.

The previously described design features of the first filter element 24 can generally be transferred in an analogous manner to the second filter element 42 (see Figures 3-5). Likewise, one or more of the features described herein may be applied to other embodiments of the filter elements 24, 42.

Figure 7 shows a method 74 according to the invention for replacing a filter element 24, 42 (see figures 2-6) on a previously described filter arrangement 16 (see figures 2-5). The procedure can be carried out for each filter element 24, 42 individually or simultaneously.

The method 74 comprises the following steps.

In a first process step 76, the fixing means 28 (see figure 4) and/or the fixing means 48 (see figure 4) are released. This can be done, for example, by loosening fastening screws.

In a subsequent process step 78, the corresponding filter element 24, 42 is removed from the filter frame 22.

In a further process step 80, another filter element 24, 42 is arranged at the filter frame 22. The other filter element 24, 42 is preferably unused. Alternatively, the removed filter element 24, 42 could be cleaned and reused.

In a subsequent process step 82, the respective fixing means 28, 48 may be secured to effect a clamped attachment of the filter element 24, 42 to the filter frame 22 via the respective mounting frame 26, 44 (see figure 3).

### Reference Numbers

- 10: brake arrangement
- 12: brake disc
- 14: brake caliper
- 16: filter arrangement
- 17: brake surface
- 18: direction of rotation
- 19: circumferential surface
- 20: holder
- 22: filter frame
- 24: first filter element
- 26: mounting frame
- 28: first fixing means
- 30: first protective cover
- 32: fastening holes
- 34: first inner area
- 36: first edge section
- 38: first sealing surface
- 40: first frame opening
- 42: second filter element
- 44: second mounting frame
- 46: second protective cover
- 48: second fixing means
- 50: second sealing surface
- 52: second edge section
- 54: second frame opening
- 56: circular path
- 58: annular portion
- 60: curved portion
- 62: central axis
- 64: screw
- 66: engagement protection
- 68: main flow direction
- 70: filter pleat
- 72: filtration section
- 74: method
- 76: process step
- 78: process step
- 80: process step
- 82: process step
- A-A: section edge

## Claims

1. A filter arrangement (16), in particular a brake dust particle filter, comprising:
at least one holder (20) for arranging the filter arrangement (16) at a structure, in particular for fastening to a wheel carrier;
a filter frame (22) attached to the at least one holder (20), wherein the filter frame (22) has at least one frame opening (40, 54) through which an air flow can pass;
at least one filter element (24, 42) having a sealing surface (38, 50), wherein the at least one filter element (24, 42) is sealingly arranged via the sealing surface (38, 50) at the filter frame (22) such to cover the at least one frame opening (40, 54); and
at least one fixing means (28, 48),
wherein the at least one filter element (24, 42) is held detachably clamped to the filter frame (22) via a mounting frame (26, 44) by the at least one fixing means (28, 48).

2. The filter arrangement (16) according to claim 1, wherein the mounting frame (26, 44) is permanently affixed to the at least one filter element (24, 42).

3. The filter arrangement (16) according to claim 1, wherein the mounting frame (26, 44) and the at least one filter element (24, 42) are detachable from one another.

4. The filter arrangement (16) according to any of the preceding claims, wherein the mounting frame (26, 44) is part of a protective cover (30, 46).

5. The filter arrangement (16) according to any of the preceding claims, wherein the at least one fixing means (28, 48) comprises at least one screw (64).

6. The filter arrangement (16) according to any of the preceding claims, wherein the at least one fixing means (28, 48) is designed as a clamp fastener.

7. The filter arrangement (16) according to any of the preceding claims, wherein the at least one filter element (24, 42) comprises at least two supporting layers and at least one filter medium, the filter medium being held pressed between the support layers.

8. The filter arrangement (16) according to any of the preceding claims, wherein the filter arrangement (16) comprises at least two filter elements (24, 42), the at least two filter elements (24, 42) both being held detachably at the filter frame (22).

9. The filter arrangement (16) according to claim 8, wherein the filter arrangement (16) comprises at least two mounting frames (26, 44), the at least two filter elements (24, 42) each being clamped to the filter frame (22) by one of the mounting frames (26, 44).

10. The filter arrangement (16) according to any of the preceding claims, wherein the filter frame (22) has a L-shaped or a U-shaped cross-section extending along a circular path (56), the filter frame (22) forming at least one substantially annular portion (58), preferably two substantially annular portions (58), to cover a brake surface (17) of a brake disc (12) at least partially, and a substantially curved portion (60) to cover a circumferential surface (19) of the brake disc (12) at least partially.

11. The filter arrangement (16) according to claim 10, wherein at least one filter element (24, 42) is arranged at the annular portion (58) and/or at least one filter element (24, 42) is arranged at the curved portion (60).

12. The filter arrangement (16) according to claim 10 or 11, wherein the filter frame (22) has a U-shaped cross-section and the filter arrangement (16) comprises at least three filter elements (24, 42), and
wherein at each of the annular and curved portions (58, 60) at least one filter element (24, 42) is arranged.

13. A brake arrangement (10) comprising a brake disc (12), a brake caliper (14) and a filter arrangement (16) according to any of the preceding claims.

14. A method (74) for replacing a filter element (24, 42) in a filter arrangement (16) according to any of claims 1 to 12, the method (74) comprising:
releasing (76) the at least one fixing means (28, 48);
removing (78) the at least one filter element (24, 42) from the filter frame (22);
arranging (80) another filter element (24, 42) at the filter frame (22); and
securing (82) the at least one fixing means (28, 48) for clamping the at least one filter element (24, 42) to the filter frame (22) via the mounting frame (26, 44).
